(19) Europäisches Patentamt
European Patent Office
Office européen des brevets

(11) Veröffentlichungsnummer: **0 474 600 B1**

# (12) EUROPÄISCHE PATENTSCHRIFT

(45) Veröffentlichungstag der Patentschrift: **21.12.94**

(51) Int. Cl.[5]: **D06P 3/54**, D06P 1/00, D06P 5/20

(21) Anmeldenummer: **91810688.1**

(22) Anmeldetag: **27.08.91**

## (54) Verfahren zum Färben von hydrophobem Textilmaterial mit Dispersionsfarbstoffen in überkritischem CO2.

(30) Priorität: **03.09.90 CH 2836/90**

(43) Veröffentlichungstag der Anmeldung: **11.03.92 Patentblatt 92/11**

(45) Bekanntmachung des Hinweises auf die Patenterteilung: **21.12.94 Patentblatt 94/51**

(84) Benannte Vertragsstaaten: **AT BE CH DE ES FR GB IT LI NL SE**

(56) Entgegenhaltungen:
**DE-A- 3 906 724**

**JOURNAL OF ORGANIC CHEMISTRY. Bd. 49, Nr. 26, 1984, EASTON US, Seiten 5097-5101; JOHN A. HYATT: 'Liquid and supercritical carbon dioxide asorganic solvents'**

(73) Patentinhaber: **CIBA-GEIGY AG**
**Klybeckstrasse 141**
**CH-4002 Basel (CH)**

(72) Erfinder: **Schlenker, Wolfgang, Dr.**
**Rixheimerstrasse 17**
**CH-4055 Basel (CH)**
Erfinder: **Werthemann, Dieter, Dr.**
**Scherkesselweg 15**
**CH-4052 Basel (CH)**
Erfinder: **Liechti, Peter, Dr.**
**Alte Olsbergerstrasse 17**
**CH-4422 Arisdorf (CH)**
Erfinder: **Della Casa, Angelo**
**Gerstenweg 66**
**CH-4125 Riehen (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die vorliegende Erfindung betrifft ein Verfahren zum Färben von hydrophobem Textilmaterial mit Dispersionsfarbstoffen.

Hydrophobe Textilmaterialien werden üblicherweise aus wässrigen Färbeflotten gefärbt Dabei tritt niemals eine voltständige Baderschöpfung auf, d.h. die Farbstoffe ziehen nicht quantitativ auf das jeweils zu färbende Substrat. Dies wiederum führt dazu, dass die nach dem Färbevorgang verbleibende Farbstoffflotte noch, abhängig von den jeweiligen Farbstoffen und Substraten, mehr oder weniger grosse Mengen Farbstoff enthält. Daher fallen beim Färben relativ grosse Mengen an farbigen Abwässern an, die aufwendig gereinigt werden müssen.

Der vorliegenden Erfindung liegt die Aufgabe zugrunde, ein Verfahren zum Färben von Textilmaterial zur Verfügung zu stellen, bei dem keine oder keine nennenswerten Mengen an farbigen Abwässern anfallen.

Diese Aufgabe wird durch das erfindungsgemässe Verfahren gelöst.

Die vorliegende Erfindung betrifft somit ein Verfahren zum Färben von hydrophobem Textilmaterial mit Dispersionsfarbstoffen, das dadurch gekennzeichnet ist, dass man das Textilmaterial in überkritischem Kohlendioxid mit einem Azofarbstoff der Formel

D-N = N-K      (1)

behandelt, worin
D den Rest einer aromatischen Diazokomponente und
K den Rest einer Kupplungskomponente bedeutet.

Das erfindungsgemässe Verfahren sieht vor, anstelle der vorstehend beschriebenen wässrigen Flotten solche Farbflotten zu verwenden, bei denen das Wasser durch überkritisches Kohlendioxid ersetzt ist Unter dem Begriff überkritisches $CO_2$ versteht man $CO_2$, bei dem der Druck und die Temperatur des $CO_2$ oberhalb des kritischen Druckes und der kritischen Temperatur liegen. Hierbei weist das überkritische $CO_2$ annähernd die Viskosität des entsprechenden Gases und eine Dichte auf, die näherungsweise mit der Dichte des entsprechend verflüssigten Gases vergleichbar ist.

Das erfindungsgemässe Verfahren weist eine Reihe von Vorteilen auf. Bedingt dadurch, dass das hierbei eingesetzte überkritische $CO_2$ nicht ins Abwasser gelangt, sondern nach der Färbung erneut eingesetzt wird, treten bei dem erfindungsgemässen Verfahren keine Abwasserbelastungen auf. Ferner laufen bei dem erfindungsgemässen Verfahren die für die Färbung des textilen Substrates erforderlichen Stoffaustauschvorgänge im Vergleich zu wässrigen Systemen wesentlich schneller ab. Dies wiederum führt dazu, dass das zu färbende textile Substrat besonders gut und schnell durchströmt werden kann. Bei Anwendung des erfindungsgemässen Verfahrens treten bei der Färbung von Wickelkörpern keine Ungleichmässigkeiten bezüglich der Durchströmung des Wickelkörpers auf, welche beispielsweise bei dem herkömmlichen Verfahren bei der Baumfärbung von Flächengebilden als Ursachen für Kantenabläufe bzw. Lägenabläufe anzusehen sind Ebenfalls können bei den erfindungsgemässen Verfahren keine Dispersionsfarbstoffe unerwünscht agglomerieren, wie dies bei den herkömmlichen Dispersionsfärbungen bisweilen der Fall ist, so dass somit durch Anwendung des erfindungsgemässen Verfahrens die bei herkömmlichen Farbeverfahren in wässrigen Systemen bekannten Aufhellungen von Dispersionsfarbstoffen und damit entsprechenden Fleckenbildungen vermieden werden.

Ein weiterer Vorteil des erfindungsgemässen Verfahrens besteht darin, dass man Dispersionsfarbstoffe einsetzen kann, die ausschliesslich aus dem eigentlichen Farbstoff bestehen und nicht die üblichen Dispergatoren und Stellmittel enthalten. Bei vielen Farbstoffen kann zudem auf eine Mahlung der Farbstoffe verzichtet werden.

Bei den im erfindungsgemässen Verfahren verwendeten Azofarbstoffen der Formel (1) handelt es sich vorzugsweise um solche, bei denen D eine Diazokomponente, ausgewählt aus der folgenden Gruppe, bedeutet:

1. Anilin, substituiert durch Chlor, Cyan, $C_1$-$C_4$-Alkyl, $C_1$-$C_4$-Alkylcarbonylamino, $C_1$-$C_4$-Alkylphenylcarbonyl, $C_1$-$C_{12}$-Alkoxycarbonyl, Phenylcarbonyl, Phenylcarbonylamino, Phenylsulfonyloxy, Phenylazo oder Tetrahydrofurylmethoxycarbonyl,
2. Nitroanilin, welches gegebenenfalls substituiert ist durch Chlor, Brom Nitro, Cyan, $C_1$-$C_4$-Alkyl, $C_1$-$C_4$-Alkoxy, $C_1$-$C_4$-Alkoxycarbonyl, $C_1$-$C_4$-Alkylsulfonyl oder Phenylcarbonyl,
3. 2-Aminobenzthiazol oder 3-Aminobenzisothiazol, die gegebenenfalls durch Chlor, Brom oder Nitro substituiert sind,

4. 5-Amin-1,2,4-thiadiazol oder 5-Amino-1,3,4-thiadiazol, die gegebenenfalls durch $C_1$-$C_4$-Alkylthio oder $C_1$-$C_4$-Alkoxycarbonyl-$C_1$-$C_4$-alkylthio substituiert sind,
5. 2-Aminothiophen, welches gegebenenfalls substituiert ist durch Nitro, Cyan, $C_1$-$C_4$-Alkylcarbonyl, $C_1$-$C_4$-Alkoxycarbonyl oder Phenylazo,
6. 2-Aminothiazol-1,3, welches gegebenenfalls substituiert ist durch Nitro,
7. 4-Aminophthalimid, welches gegebenenfalls am Imidstickstoff durch $C_1$-$C_4$-Alkyl und/oder im Phenylring durch CN substituiert ist,
8. 2-Aminoimidazol, welches gegebenenfalls substituiert ist durch Cyan oder Cyan-$C_1$-$C_4$-alkyl,
9. 1-Amino-4-phenylazonaphthalin.

Vorzugsweise werden solche Farbstoffe der Formel (I) verwendet, worin D eine Diazokomponente, ausgewählt aus der folgenden Gruppe, bedeutet:

1a. Anilin, substituiert durch $C_1$-$C_4$-Alkylcarbonylamino; $C_1$-$C_4$-Alkylphenylcarbonyl, $C_1$-$C_{12}$-Alkoxycarbonyl, Phenylcarbonylamino, Phenylsulfonyloxy, Phenylazo oder Chlor,
2a. Nitroanilin, welches gegebenenfalls substituiert ist durch Chlor, Brom, Cyan, Nitro oder $C_1$-$C_4$-Alkoxy,
3a. 2-Aminobenzthiazol oder 3-Aminobenzisothiazol, welche durch Chlor, Brom oder Nitro substituiert sind,
4a. durch $C_1$-$C_4$-Alkoxycarbonyl-$C_2$-$C_4$-alkylthio substituiertes 5-Amino-1,2,4-thiadiazol,
5a. durch Nitro oder Cyan substituiertes 2-Aminothiophen, welches zusätzlich noch mindestens einmal durch Nitro, $C_1$-$C_4$-Alkylcarbonyl, $C_1$-$C_4$-Alkoxycarbonyl oder Phenylazo substituiert ist,
6a. 2-Amino-5-nitrothiazol-1,3,
7a. N-$C_1$-$C_4$-Alkyl-4-amino-5-cyanphthalimid,
8a. 1-Cyanmethyl-2-amino-4,5-dicyanimidazol.

Unter diesen Farbstoffen sind diejenigen für das erfindungsgemässe Verfahren besonders geeignet, bei denen D eine Diazokomponente, ausgewählt aus der folgenden Gruppe, bedeutet:

1b. Anilin, substituiert durch Acetylamino, $C_3$-$C_8$-Alkoxycarbonyl, Phenylsulfonyloxy, Phenylazo oder Chlor,
2b. Nitroanilin, welches noch mindestens einmal substituiert ist durch Chlor, Brom, Cyan oder Nitro,
3b. 2-Amino-6-nitrobenzthiazol, 2-Aminobenzthiazol, welches zweimal durch Chlor substituiert ist, oder 3-Amino-5-nitrobenzisothiazol,
4b. 5-Amino-3-$C_1$-$C_2$-alkoxycarbony-$C_2$-$C_4$-alkylthio-1,2,4-thiadiazol,
5b. 2-Amino-3-nitro-5-$C_1$-$C_4$-alkylcarbonylthiophen,
6b. 2-Amino-5-nitrothiazol-1,3,
7b. N-$C_1$-$C_2$-Alkyl-4-amino-5-cyanphthalimid.

Bei den im erfindungsgemässen Verfahren verwendeten Azofarbstoffen der Formel (1) handelt es sich vorzugsweise um solche, bei denen K eine Kupplungskomponente, ausgewählt aus der folgenden Gruppe, bedeutet:

1. Pyridinderivate der Formel

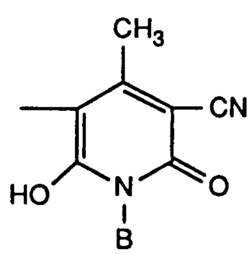

(2)

worin B $C_1$-$C_{16}$-Alkyl bedeutet, welches gegebenenfalls substituiert ist durch Phenyl, Phenoxy, Hydroxy oder $C_1$-$C_4$-Alkoxy,

2. Anilinderivate der Formel

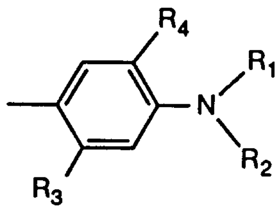

(3)

worin
$R_1$ und $R_2$ unabhängig voneinander je Wasserstoff oder $C_1$-$C_6$-Alkyl bedeuten, welches gegebenenfalls substituiert ist durch Cyan, Hydroxy, $C_1$-$C_4$-Alkylcarbonyloxy, Phenylcarbonyloxy, Cyan-$C_1$-$C_4$-alkoxy, Phenyl, Phenoxy-$C_1$-$C_4$-alkoxy, Succinimido oder $C_1$-$C_4$-Alkoxycarbonyl,
oder worin $R_1$ und $R_2$ zusammen mit dem sie verbindenden N-Atom einen 5- oder 6-Ring bilden,
$R_3$ Wasserstoff, Chlor, $C_1$-$C_4$-Alkyl, $C_1$-$C_4$-Alkoxy, $C_1$-$C_4$-Alkylcarbonylamino, $C_1$-$C_4$-Alkylsulfonylamino, Phenylcarbonylamino oder Cyan-$C_1$-$C_4$-alkylcarbonylamino und
$R_4$ Wasserstoff, Chlor, Brom, $C_1$-$C_4$-Alkyl oder $C_1$-$C_4$-Alkoxy bedeuten;
3. Pyrazolderivate der Formel

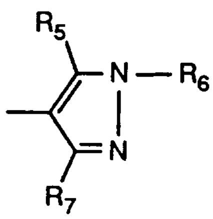

(4)

worin
$R_5$ Hydroxy oder Imino
$R_6$ Phenyl oder eine Gruppe der Formel

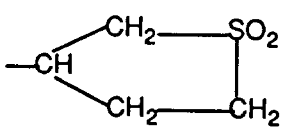

(5)

und
$R_7$ $C_1$-$C_4$-Alkyl oder $C_1$-$C_4$-Alkoxycarbonyl bedeuten;
4. Phenol oder 1-Naphthol, welche gegebenenfalls substituiert sind durch $C_1$-$C_4$-Alkyl oder eine Gruppe der Formel

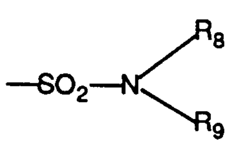

(6)

worin $R_8$ $C_1$-$C_4$-Alkyl und $R_9$ Hydroxy-$C_1$-$C_4$-alkyl oder $C_1$-$C_4$-Alkylcarbonyloxy-$C_1$-$C_4$-alkyl bedeuten; oder Phenol, welches durch Phenyl substituiert ist;

5. Pyrimidinderivate der Formel

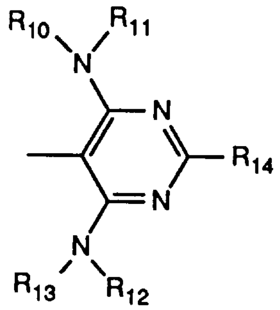

(7)

worin $R_{10}$, $R_{11}$, $R_{12}$ und $R_{13}$ unabhängig voneinander je Wasserstoff, $C_1$-$C_4$-Alkyl, Hydroxy-$C_1$-$C_4$-alkyl, Cyan-$C_1$-$C_4$-alkyl oder $C_1$-$C_4$-Alkoxy-$C_1$-$C_4$-alkyl und $R_{14}$ gegebenenfalls substituiertes Phenyl oder Naphthyl bedeuten;

6. Cyanaminopyridine der Formel

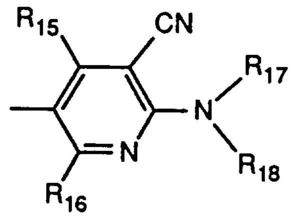

(8)

worin

$R_{15}$ Amino oder $C_1$-$C_4$-Alkyl,

$R_{16}$ Amino, NH-$C_1$-$C_4$-Alkyl oder -NH-$C_1$-$C_4$-Hydroxyalkyl und

$R_{17}$ und $R_{18}$ unabhängig voneinander je Wasserstoff oder $C_1$-$C_8$-Alkyl, welches gegebenenfalls durch Hydroxy, Cyan, Chlor, Brom, $C_1$-$C_8$-Alkoxy, Phenoxy, Phenyl oder Phenoxy-$C_1$-$C_4$-alkoxy substituiert ist, bedeuten.

Vorzugsweise werden solche Farbstoffe der Formel (1) verwendet, bei denen K eine Kupplungskomponente, ausgewählt aus der folgenden Gruppe, bedeutet:

1a. Pyridinderivate der Formel (2), worin B verzweigtes $C_1$-$C_{12}$-Alkyl oder $C_1$-$C_4$-Alkoxy-$C_2$-$C_4$-alkyl bedeutet;

2a. Anilinderivate der Formel (3), worin $R_1$ und $R_2$ unabhängig voneinander je $C_1$-$C_4$-Alkyl bedeuten, welches gegebenenfalls substituiert ist durch Hydroxy, Cyan, $C_1$-$C_4$-Alkylcarbonyloxy, Phenylcarbonyloxy, Phenyl, Phenoxy-$C_1$-$C_4$-alkoxy oder $C_1$-$C_4$-Alkoxycarbonyl, $R_3$ Wasserstoff, Chlor, Methyl oder Methoxy und $R_4$ Wasserstoff oder Methoxy bedeuten;

3a. Pyrazolderivate der Formel (4), worin $R_5$ Hydroxy, $R_6$ Phenyl und $R_7$ $C_1$-$C_4$-Alkyl oder $C_1$-$C_4$-Alkoxycarbonyl bedeuten;

4a. Phenol, welches substituiert ist durch $C_1$-$C_4$-Alkyl oder Phenyl, oder 1-Naphthol, welches substituiert ist durch eine Gruppe der Formel (6), worin $R_8$ $C_1$-$C_2$-Alkyl und $R_9$ Hydroxy-$C_1$-$C_4$-alkyl oder $C_1$-$C_2$-Alkylcarbonyloxy-$C_1$-$C_4$-alkyl bedeuten;

5a. Pyrimidinderivate der Formel (7), worin $R_{10}$ und $R_{12}$ je Wasserstoff, $R_{11}$ und $R_{13}$ unabhängig voneinander je $C_1$-$C_4$-Alkyl oder Hydroxy-$C_1$-$C_4$-alkyl und $R_{14}$ Phenyl bedeuten;

6a. Cyanaminopyridine der Formel (8), worin $R_{15}$ Amino oder $C_1$-$C_2$-Alkyl, $R_{16}$ Amino oder -NH-$C_1$-$C_2$-Hydroxyalkyl, $R_{17}$ Wasserstoff und $R_{18}$ $C_1$-$C_8$-Alkyl, welches gegebenenfalls durch $C_1$-$C_8$-Alkoxy, Phenoxy oder Phenoxy-$C_1$-$C_4$-alkoxy substituiert ist.

Im erfindungsgemässen Verfahren sind ganz besonders die Farbstoffe der Formel (1) geeignet, worin D eine Diazokomponente aus der folgendenden Gruppe bedeutet: 1b. Anilin, substituiert durch Acetylamino, $C_3$-$C_8$-Alkoxycarbonyl, Phenylsulfonyloxy oder Phenylazo;

2b. Nitroanilin, welches noch mindestens einmal substituiert ist durch Chlor, Brom, Cyan oder Nitro;

3b. 2-Amin-6-nitrobenzthiazol, 2-Aminobenzthiazol, welches zweimal durch Chlor substituiert ist, oder 3-Amino-5-nitrobenzisothiazol, und K eine Kupplungskomponente aus der folgenden Gruppe ist:

1a. Pyridinderivate der Formel (2), worin B verzweigtes $C_1$-$C_{12}$-Alkyl oder $C_1$-$C_4$-Alkoxy-$C_2$-$C_4$-alkyl bedeutet;

2a. Anilinderivate der Formel (3), worin $R_1$ und $R_2$ unabhängig voneinander je $C_1$-$C_4$-Alkyl bedeuten, welches gegebenenfalls substituiert ist durch Hydroxy, Cyan, $C_1$-$C_4$-Alkylcarbonyloxy, Phenylcarbonyloxy, Phenyl, Phenoxy-$C_1$-$C_4$-alkoxy oder $C_1$-$C_4$ Alkoxycarbonyl, $R_3$ Wasserstoff, Chlor, Methyl oder Methoxy und $R_4$ Wasserstoff oder Methoxy bedeuten.

Unter Alkylresten sind erfindungsgemäss generell geradkettige, verzweigte oder cyclischen Alkylgruppen zu verstehen. Es handelt sich z.B. um Methyl, Ethyl, Propyl, i-Propyl, Butyl, i-Butyl, tert.-Butyl, Amyl, tert-Amyl(1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert.-Octyl, 2-Ethylhexyl, n-Nonyl, Isononyl, Decyl, Dodecyl, Cyclopentyl, Cyclohexyl, Methylcyclohexyl sowie die dazugehörenden Isomeren. Die Alkylreste enthalten vorzugsweise 1 bis 6 C-Atome, vor allem 1 bis 4 C-Atome.

Diese Alkylreste können substituiert sein, z.B. durch Halogen, Hydroxy, Alkoxy, Cyan oder Phenyl. Beispiele für solche substituierte Alkylreste sind Hydroxyethyl, Methoxymethyl, Ethoxyethyl, Cyanethyl, Propoxypropyl, Benzyl, Chlorethyl oder Cyanoethyl.

Geeignete Alkoxyreste sind vorzugsweise solche mit 1 bis 4 C-Atomen z.B. Methoxy, Ethoxy, Propoxy, iso-Propoxy, n-Butoxy, iso-Butoxy oder tert.-Butoxy.

Auch die Phenylreste können substituiert sein, z.B. durch Chlor, Brom, $C_1$-$C_4$-Alkyl, $C_1$-$C_4$-Alkoxy, Nitro oder Cyan.

Wegen ihrer guten färberischen Eigenschaften im erfindungsgemässen Verfahren sind die in den Beispielen aufgeführten Farbstoffe ganz besonders bevorzugt.

Die Farbstoffe der Formel (1) sind bekannt oder können auf an sich bekannte Art hergestellt werden.

Das erfindungsgemässe Verfahren eignet sich zum Färben von halbsynthetischen und insbesondere synthetischen hydrophoben Fasermaterialien, vor allem Textilmaterialien. Textilmaterialien aus Mischgeweben, die derartige halbsynthetische bzw. synthetische hydrophobe Textilmaterielien enthalten, können ebenfalls nach dem erfindungsgemässen Verfahren gefärbt werden.

Als halbsynthetische Textilmaterialien kommen vor allem Cellulose-2½-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)cyclohexan; aus Polycarbonaten, z.B. aus $\alpha,\alpha$-Dimethyl-4,4'-dihydroxy-diphenylmethan und Phosgen, aus Fasern auf Polyvinylchlorid-, Polypropylen- oder Polyamid-Basis, z.B. Polyamid 6.6., Polyamid 6.10, Polyamid 6, Polyamid 11 oder Poly(1,4-phenylenterephthalamid).

Die bei dem erfindungsgemässen Verfahren angewendete Färbetemperatur richtet sich im wesentlichen nach dem zu färbenden Substrat. Normalerweise liegt sie etwa zwischen 90 und 200 °C, vorzugsweise zwischen etwa 100 und 150 °C.

Der anzuwendende Druck muss mindestens so gross sein, dass das $CO_2$ in überkritischem Zustand vorliegt. Vorzugsweise liegt der Druck zwischen etwa 73 und 400 bar, insbesondere zwischen etwa 150 und 250 bar. Bei der bevorzugten Färbetemperatur für Polyestermaterial von ca 130 °C beträgt der Druck etwa 200 bar.

Das Flottenverhältnis (Massenverhältnis Textilmaterial:$CO_2$) beim Färben nach dem erfindungsgemässen Verfahren richtet sich nach der zu behandelnden Ware und deren Aufmachung. Ueblicherweise variiert es zwischen einem Wert von 1:2 bis 1:100, vorzugsweise etwa 1:5 bis 1:75. Sollen beispielsweise Polyestergarne, die auf entsprechende Kreuzspulen aufgewickelt sind, nach dem erfindungsgemässen Verfahren gefärbt werden, so geschieht dies vorzugsweise bei relativ kurzen Flottenverhältnissen, d.h. Flottenverhältnissen zwischen 1:2 bis 1:5. Derartige kurze Flottenverhältnisse bereiten in der Regel bei dem herkömmlichen Färbeverfahren im wässrigen System Schwierigkeiten, da hierbei bedingt durch die hohe Farbstoffkonzentration häufig die Gefahr besteht, dass die feindispersen Systeme agglomerieren. Dies tritt jedoch bei dem erfindungsgemässen Verfahren nicht auf.

Zur Reinigung des überkritischen $CO_2$ nach der Färbung bestehen mehrere Möglichkeiten. Man kann z.B. den in dem überkritischen $CO_2$ verbleibenden Farbstoffrest über entsprechende Filter ad- bzw. absorbieren. Hierfür eignen sich insbesondere die an sich bekannten Kieselgel-, Kieselgur-, Kohle-, Zeolith- und Aluminiumoxidfilter.

Darüberhinaus besteht die Möglichkeit, die nach der Färbung in dem überkritischen $CO_2$ verbleibenden Farbstoffe durch eine Temperatur- und/oder Druckerniedrigung und/oder eine Volumenvergrösserung zu

entfernen. Hierbei wandelt sich das überkritische $CO_2$ in das entsprechende Gas um, das dann aufgefangen wird und erneut nach Ueberführung in den überkritischen Zustand zur Färbung von weiteren Substraten verwendet wird Hierbei scheiden sich die Farbstoffe als flüssige oder feste Farbstoffe ab, die entsprechend gesammelt und für weitere Färbungen weiterverwendet werden können.

Die nachfolgenden Beispiele erläutern die Erfindung.

Beispiel 1: 24,5 μmol des Farbstoffes der Formel

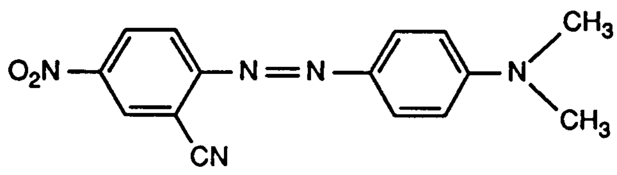

werden auf dem Boden eines Autoklaven mit einem Innenvolumen von 500 ml vorgelegt. 330g $CO_2$ werden in fester Form (Trockeneis) eingewogen. Ein Streifen Polyestergewebe von 5 g wird um die im Deckel des Autoklaven eingebauten Sensoren für Druck und Temperatur gewickelt und mit einem Faden zusammengeheftet.

Nach dem Verschliessen des Autoklaven geht die Innentemperatar sehr schnell auf ca. -10 °C zurück. Nachdem die Innentemperatur 0 °C erreicht hat, wird der Inhalt des Autoklaven mit etwa 3 °C/min auf 130 °C aufgeheizt. Der Innendruck steigt dabei auf ca. 200 bar an. Diese Bedingungen werden 30 Minuten lang konstant gehalten. Danach wird bei ausgeschalteter Heizung mit Druckluft gekühlt Druck und Temperatur nehmen dabei exponentiell ab. Nach zwei Stunden werden ca. 70 bar erreicht, danach wird durch Oeffnen eines Veltils entspannt.

Man erhält rubinrot gefärbtes Polyestergewebe in ähnlicher Qualität wie beim Färben nach üblichen Methoden aus wässriger Flotte. Insbesondere die Reib-, Licht- und Waschechtheit der Färbung sind gleich gut.

Der Ausziehgrad des Farbstoffes beträgt etwa 98 %.

Beispiele 2 bis 46: Nach der im Beispiel 1 beschriebenen Methode lassen sich Färbungen auf Polyestergewebe auch mit den folgenden Farbstoffen herstellen:

| Beispiel | Farbstoff |
|---|---|
| 2 | 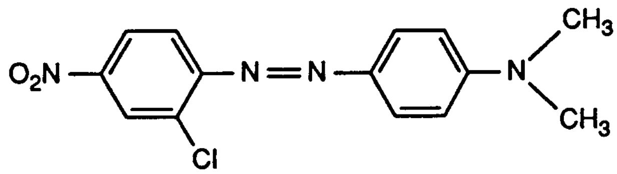 |
| 3 | 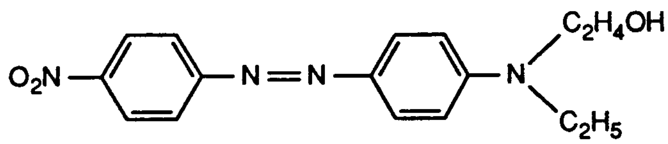 |
| 4 | 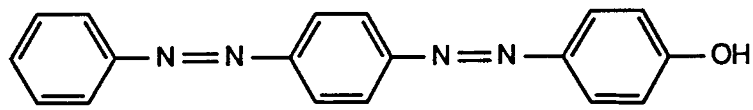 |
| 5 | 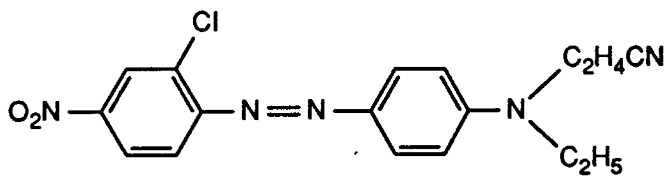 |
| 6 | 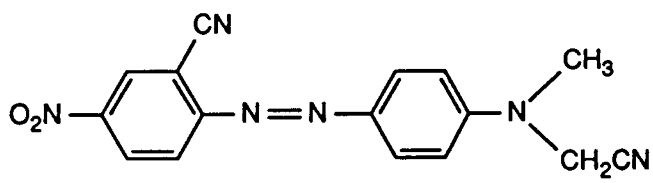 |
| 7 | 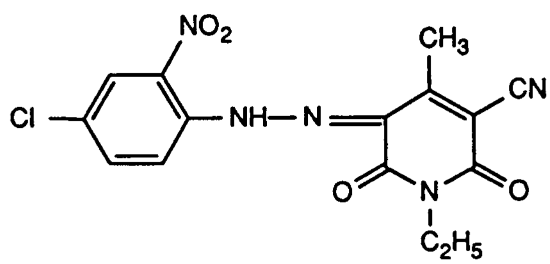 |

| Beispiel | Farbstoff |
|---|---|
| 8 | 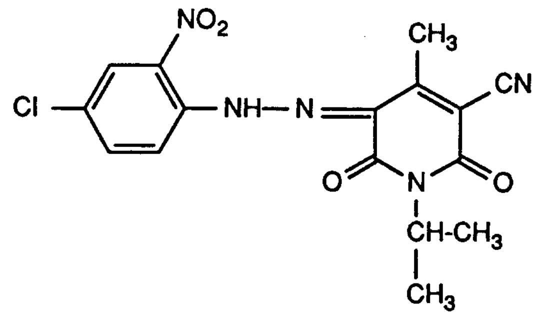 |
| 9 | 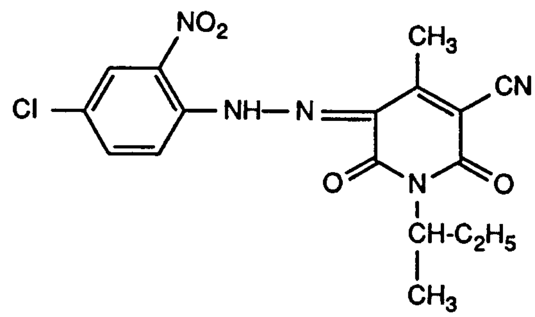 |
| 10 | 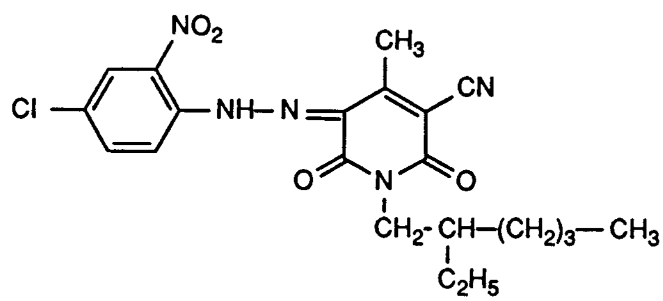 |
| 11 | 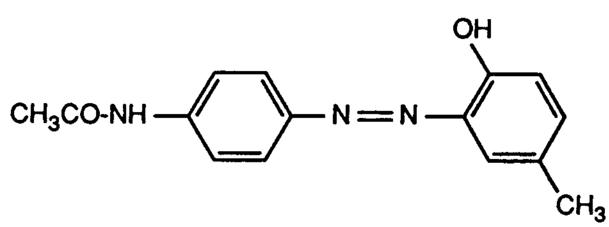 |
| 12 | 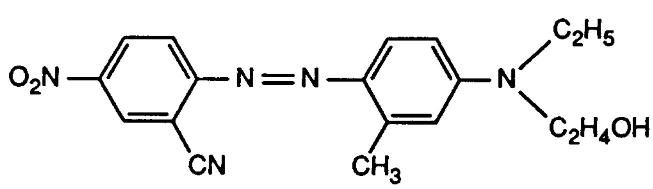 |

| Beispiel | Farbstoff |
|---|---|
| 13 | 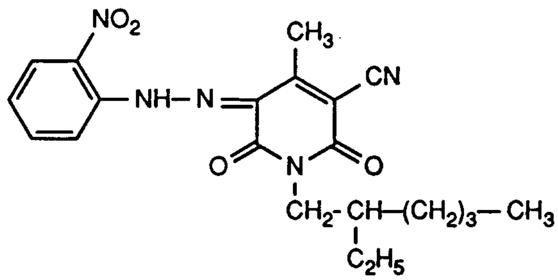 |
| 14 | 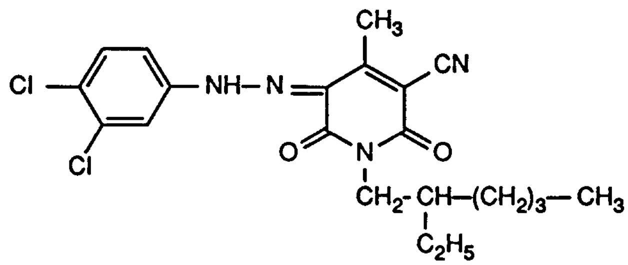 |
| 15 | 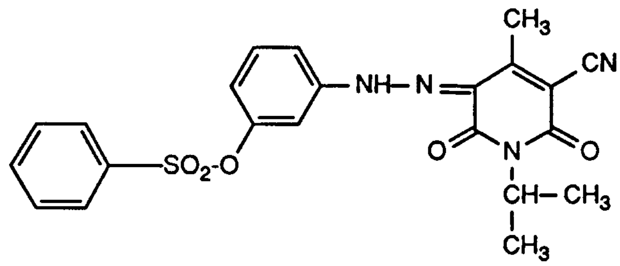 |
| 16 | 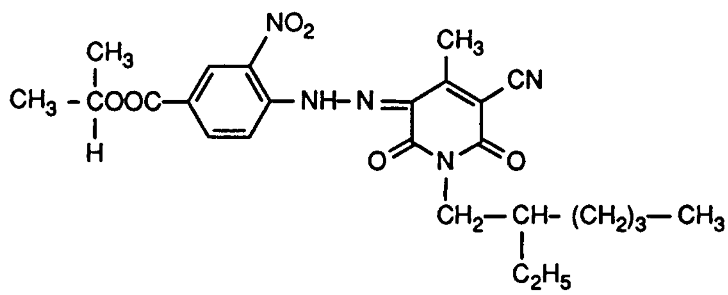 |
| 17 | 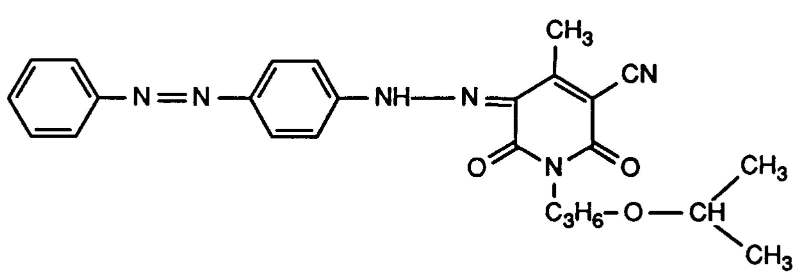 |

| Beispiel | Farbstoff |
|---|---|
| 18 | 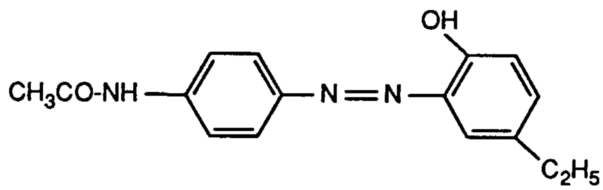 |
| 19 | 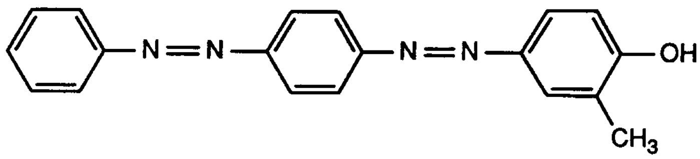 |
| 20 | 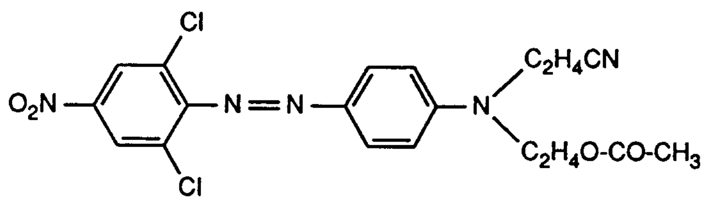 |
| 21 | 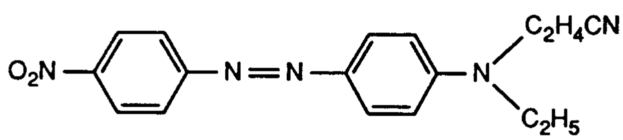 |
| 22 | 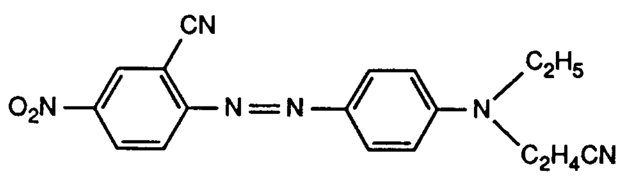 |
| 23 | 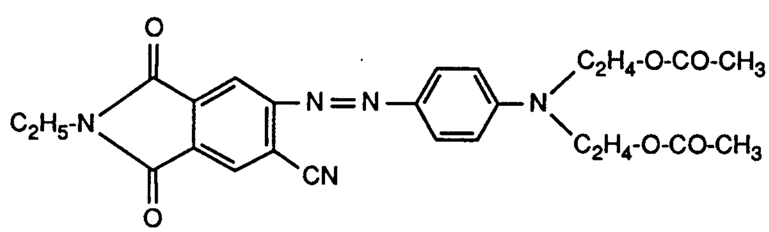 |
| 24 | 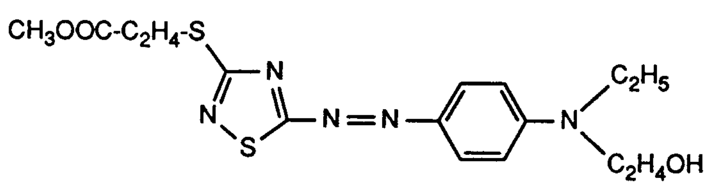 |

| Beispiel | Farbstoff |
| --- | --- |
| 25 | 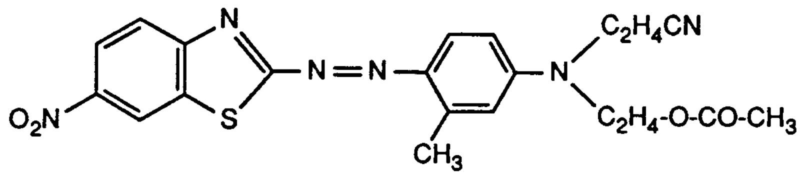 |
| 26 | 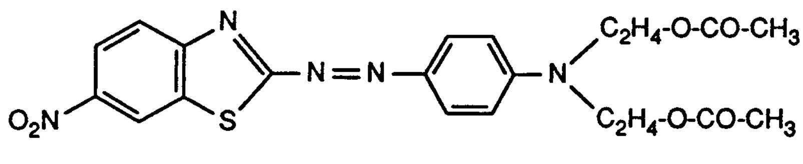 |
| 27 | 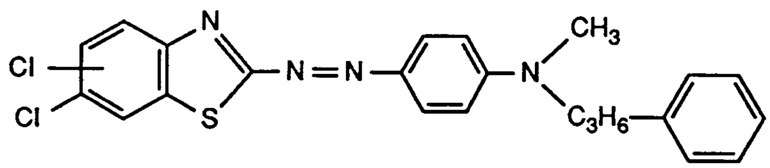 |
| 28 | 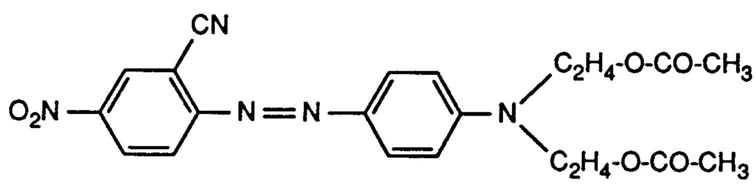 |
| 29 | 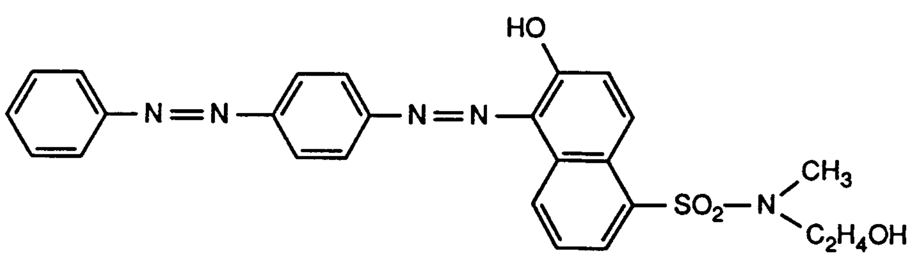 |
| 30 | 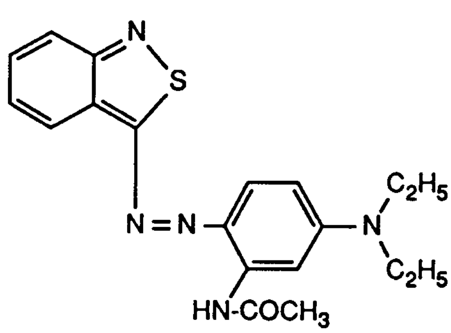 |

| Beispiel | Farbstoff |
|---|---|
| 31 | 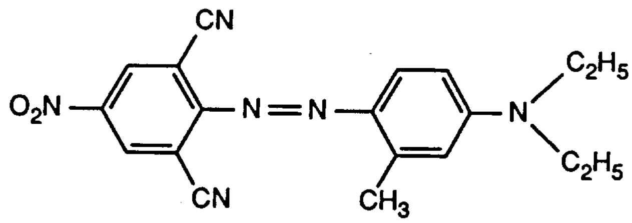 |
| 32 | 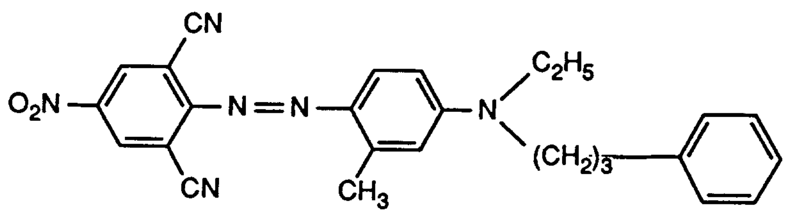 |
| 33 | 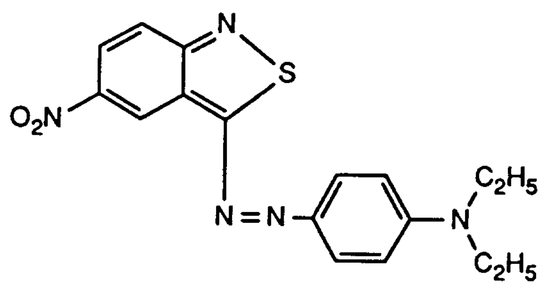 |
| 34 | 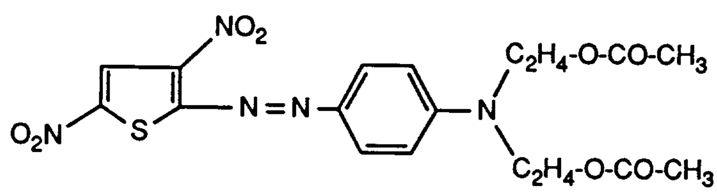 |
| 35 | 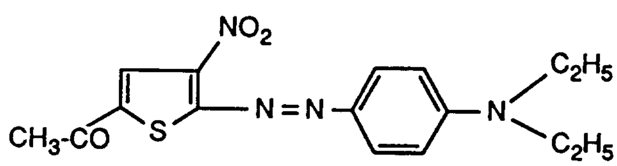 |
| 36 | 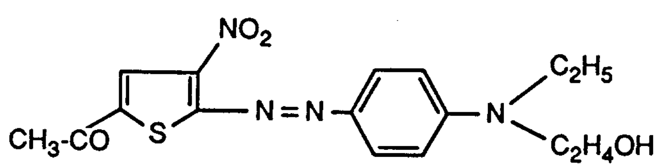 |

| Beispiel | Farbstoff |
|---|---|
| 37 | 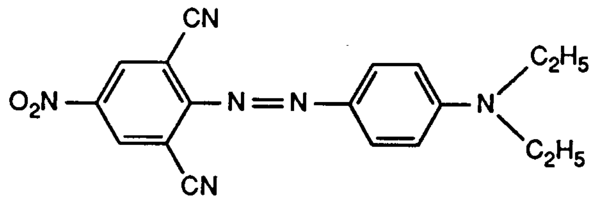 |
| 38 | 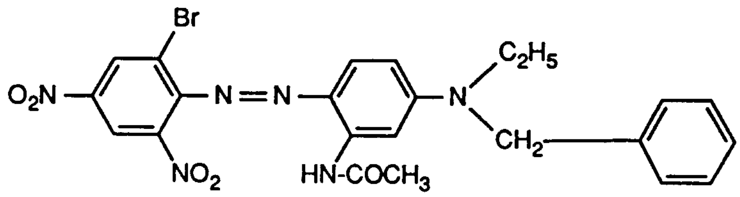 |
| 39 | 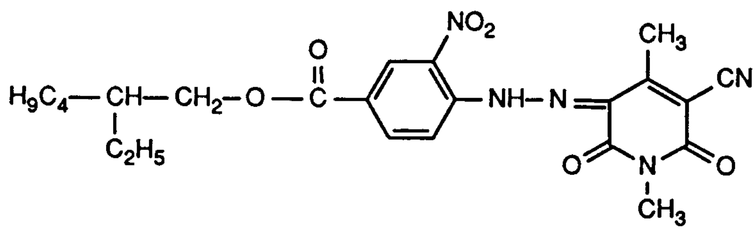 |
| 40 | 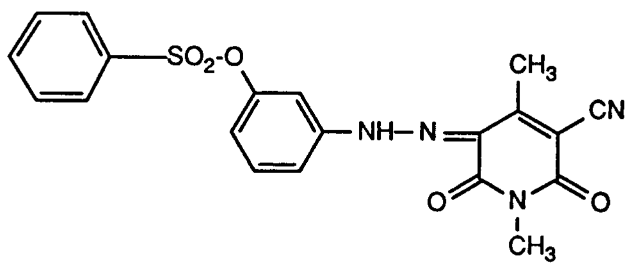 |
| 41 | 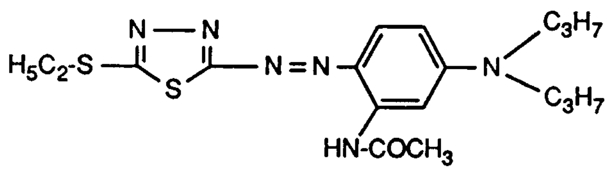 |
| 42 | 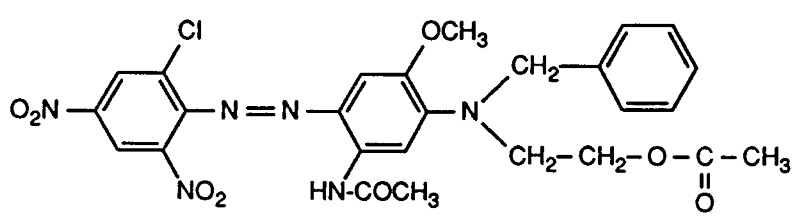 |

| Beispiel | Farbstoff |
|---|---|
| 43 | 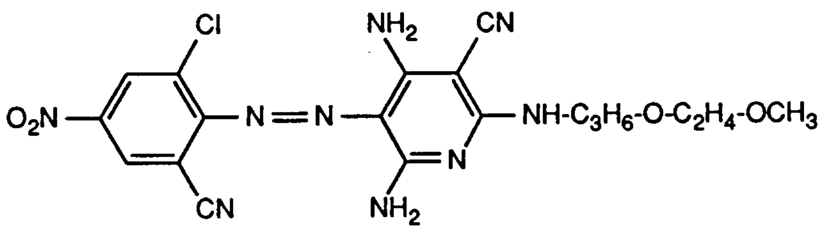 |
| 44 | 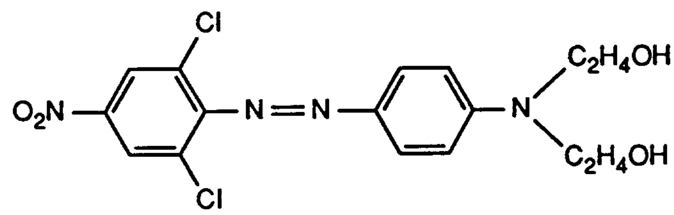 |
| 45 | 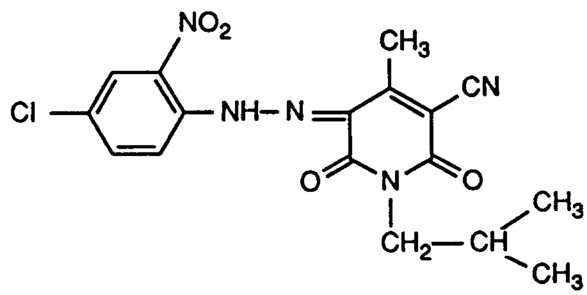 |
| 46 | 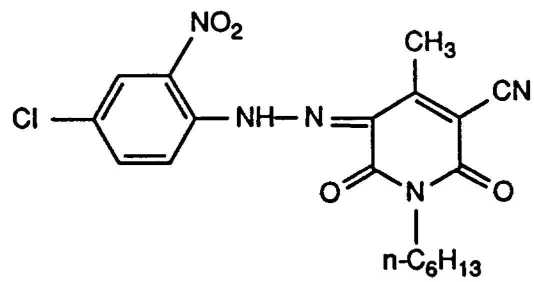 |

**Patentansprüche**

1. Verfahren zum Färben von hydrophobem Textilmaterial mit Dispersionsfarbstoffen, dadurch gekennzeichnet, dass man das Textilmaterial in überkritischem Kohlendioxid mit einem Azofarbstoff der Formel

   D-N = N-K (1)

   behandelt, worin
   D den Rest einer aromatischen Diazokomponente und
   K den Rest einer Kupplungskomponente bedeutet.

2. Verfahren gemäss Anspruch 1, dadurch gekennzeichnet, dass man einen Azofarbstoff der Formel (1) verwendet, worin D eine Diazokomponente, ausgewählt aus der folgenden Gruppe, bedeutet:

1. Anilin, substituiert durch Chlor, Cyan, $C_1$-$C_4$-Alkyl, $C_1$-$C_4$-Alkylcarbonylamino, $C_1$-$C_4$-Alkylphenylcarbonyl, $C_1$-$C_{12}$-Alkoxycarbonyl, Phenylcarbonyl, Phenylcarbonylamino, Phenylsulfonyloxy, Phenylazo oder Tetrahydrofurylmethoxycarbonyl,
2. Nitroanilin, welches gegebenenfalls substituiert ist durch Chlor, Brom Nitro, Cyan, $C_1$-$C_4$-Alkyl, $C_1$-$C_4$-Alkoxy, $C_1$-$C_4$-Alkoxycarbonyl, $C_1$-$C_4$-Alkylsulfonyl oder Phenylcarbonyl,
3. 2-Aminobenzthiazol oder 3-Aminobenzisothiazol, die gegebenenfalls durch Chlor, Brom oder Nitro substituiert sind,
4. 5-Amino-1,2,4-thiadiazol oder 5-Amino-1,3,4-thiadiazol, die gegebenenfalls durch $C_1$-$C_4$-Alkylthio oder $C_1$-$C_4$-Alkoxycarbonyl-$C_1$-$C_4$-alkylthio substituiert sind,
5. 2-Aminothiophen, welches gegebenenfalls substituiert ist durch Nitro, Cyan, $C_1$-$C_4$-Alkylcarbonyl, $C_1$-$C_4$-Alkoxycarbonyl oder Phenylazo,
6. 2-Aminothiazol-1,3, welches gegebenenfalls substituiert ist durch Nitro,
7. 4-Aminophthalimid, welches gegebenenfalls am Imidstickstoff durch $C_1$-$C_4$-Alkyl und/oder im Phenylring durch CN substituiert ist,
8. 2-Aminoimidazol, welches gegebenenfalls substituiert ist durch Cyan oder Cyan-$C_1$-$C_4$-alkyl,
9. 1-Amino-4-phenylazonaphthalin.

**3.** Verfahren gemäss Anspruch 2, worin D eine Diazokomponente, ausgewählt aus der folgenden Gruppe, bedeutet:
1a. Anilin, substituiert durch $C_1$-$C_4$-Alkylcarbonylamino; $C_1$-$C_4$-Alkylphenylcarbonyl, $C_1$-$C_{12}$-Alkoxycarbonyl, Phenylcarbonylamino, Phenylsulfonyloxy, Phenylazo oder Chlor,
2a. Nitroanilin, welches gegebenenfalls substituiert ist durch Chlor, Brom, Cyan, Nitro oder $C_1$-$C_4$-Alkoxy,
3a. 2-Aminobenzthiazol oder 3-Aminobenzisothiazol, welche durch Chlor, Brom oder Nitro substituiert sind,
4a. durch $C_1$-$C_4$-Alkoxycarbonyl-$C_2$-$C_4$-alkylthio substituiertes 5-Amino-1,2,4-thiadiazol,
5a. durch Nitro oder Cyan substituiertes 2-Aminothiophen, welches zusätzlich noch mindestens einmal durch Nitro, $C_1$-$C_4$-Alkylcarbonyl, $C_1$-$C_4$-Alkoxycarbonyl oder Phenylazo substituiert ist,
6a. 2-Amino-5-nitrothiazol-1,3,
7a. N-$C_1$-$C_4$-Alkyl-4-amino-5-cyanphthalimid,
8a. 1-Cyanmethyl-2-amino-4,5-dicyanimidazol.

**4.** Verfahren gemäss Anspruch 3, worin D eine Diazokomponente, ausgewählt aus der folgenden Gruppe, bedeutet:
1b. Anilin, substituiert durch Acetylamino, $C_3$-$C_8$-Alkoxycarbonyl, Phenylsulfonyloxy, Phenylazo oder Chlor,
2b. Nitroanilin, welches noch mindestens einmal substituiert ist durch Chlor, Brom, Cyan oder Nitro,
3b. 2-Amino-6-nitrobenzthiazol, 2-Aminobenzthiazol, welches zweimal durch Chlor substituiert ist, oder 3-Amino-5-nitrobenzisothiazol,
4b. 5-Amino-3-$C_1$-$C_2$-alkoxycarbonyl-$C_2$-$C_4$-alkylthio-1,2,4-thiadiazol,
5b. 2-Amino-3-nitro-5-$C_1$-$C_4$-alkylcarbonylthiophen,
6b. 2-Amino-5-nitrothiazol-1,3,
7b. N-$C_1$-$C_2$-Alkyl-4-amino-5-cyanphthalimid.

**5.** Verfahren gemäss einem der Ansprüche 1 bis 4, dadurch gekennzeichnet, dass man einen Azofarbstoff der Formel (1) verwendet, worin K eine Kupplungskomponente, ausgewählt aus der folgenden Gruppe, bedeutet:
1. Pyridinderivate der Formel

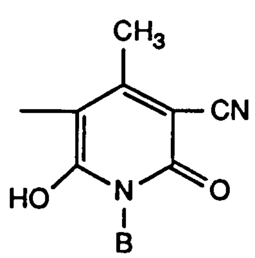

(2)

worin B $C_1$-$C_{16}$-Alkyl bedeutet, welches gegebenenfalls substituiert ist durch Phenyl, Phenoxy, Hydroxy oder $C_1$-$C_4$-Alkoxy,
2. Anilinderivate der Formel

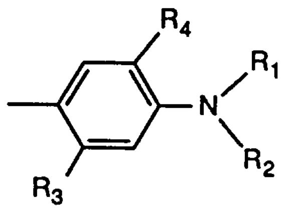

(3)

worin
$R_1$ und $R_2$ unabhängig voneinander je Wasserstoff oder $C_1$-$C_6$-Alkyl bedeuten, welches gegebenenfalls substituiert ist durch Cyan, Hydroxy, $C_1$-$C_4$-Alkylcarbonyloxy, Phenylcarbonyloxy, Cyan-$C_1$-$C_4$-alkoxy, Phenyl, Phenoxy-$C_1$-$C_4$-alkoxy, Succinimido oder $C_1$-$C_4$-Alkoxycarbonyl,
oder worin $R_1$ und $R_2$ zusammen mit dem sie verbindenden H-Atom einen 5-oder 6-Ring bilden,
$R_3$ Wasserstoff, Chlor, $C_1$-$C_4$-Alkyl, $C_1$-$C_4$-Alkoxy, $C_1$-$C_4$-Alkylcarbonylamino, $C_1$-$C_4$-Alkylsulfonylamino, Phenylcarbonylamino oder Cyan-$C_1$-$C_4$-alkylcarbonylamino und
$R_4$ Wasserstoff, Chlor, Brom, $C_1$-$C_4$-Alkyl oder $C_1$-$C_4$-Alkoxy bedeuten;
3. Pyrazolderivate der Formel

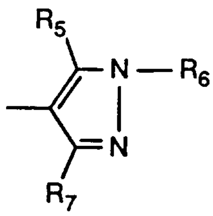

(4)

worin
$R_5$ Hydroxy oder Imino
$R_6$ Phenyl oder eine Gruppe der Formel

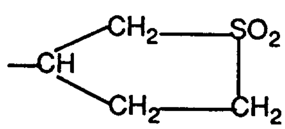

(5)

und
$R_7$ $C_1$-$C_4$-Alkyl oder $C_1$-$C_4$-Alkoxycarbonyl bedeuten;
4. Phenol oder 1-Naphthol, welche gegebenenfalls substituiert sind durch $C_1$-$C_4$-Alkyl oder eine Gruppe der Formel

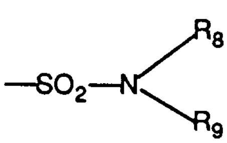

(6)

worin $R_8$ $C_1$-$C_4$-Alkyl und $R_9$ Hydroxy-$C_1$-$C_4$-alkyl oder $C_1$-$C_4$-Alkylcarbonyloxy-$C_1$-$C_4$-alkyl bedeuten; oder Phenol, welches durch Phenyl substituiert ist;

5. Pyrimidinderivate der Formel

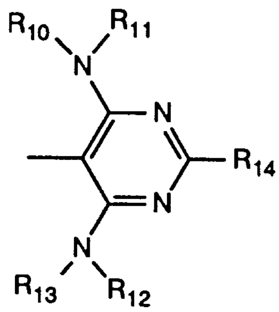

(7)

worin $R_{10}$, $R_{11}$, $R_{12}$ und $R_{13}$ unabhängig voneinander je Wasserstoff, $C_1$-$C_4$-Alkyl, Hydroxy-$C_1$-$C_4$-alkyl, Cyan-$C_1$-$C_4$-alkyl oder $C_1$-$C_4$-Alkoxy-$C_1$-$C_4$-alkyl und
$R_{14}$ gegebenenfalls substituiertes Phenyl oder Naphthyl bedeuten;
6. Cyanaminopyridine der Formel

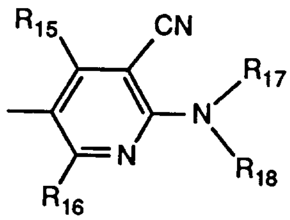

(8)

worin
$R_{15}$ Amino oder $C_1$-$C_4$-Alkyl,
$R_{16}$ Amino, NH-$C_1$-$C_4$-Alkyl oder -NH-$C_1$-$C_4$-Hydroxyalkyl und
$R_{17}$ und $R_{18}$ unabhängig voneinander je Wasserstoff oder $C_1$-$C_8$-Alkyl, welches gegebenenfalls durch Hydroxy, Cyan, Chlor, Brom, $C_1$-$C_8$-Alkoxy, Phenoxy, Phenyl oder Phenoxy-$C_1$-$C_4$-alkoxy substituiert ist,
bedeuten.

**6.** Verfahren gemäss Anspruch 5, worin K eine Kupplungskomponente, ausgewählt aus der folgenden Gruppe, bedeutet:
1a. Pyridinderivate der Formel (2), worin B verzweigtes $C_1$-$C_{12}$-Alkyl oder $C_1$-$C_4$-Alkoxy-$C_2$-$C_4$-alkyl bedeutet;
2a. Anilinderivate der Formel (3), worin $R_1$ und $R_2$ unabhängig voneinander je $C_1$-$C_4$-Alkyl bedeuten, welches gegebenenfalls substituiert ist durch Hydroxy, Cyan, $C_1$-$C_4$-Alkylcarbonyloxy, Phenylcarbonyloxy, Phenyl, Phenoxy-$C_1$-$C_4$-alkoxy oder $C_1$-$C_4$-Alkoxycarbonyl, $R_3$ Wasserstoff, Chlor, Methyl oder Methoxy und $R_4$ Wasserstoff oder Methoxy bedeuten;
3a. Pyrazolderivate der Formel (4), worin $R_5$ Hydroxy, $R_6$ Phenyl und $R_7$ $C_1$-$C_4$-Alkyl oder $C_1$-$C_4$-Alkoxycarbonyl bedeuten;
4a. Phenol, welches substituiert ist durch $C_1$-$C_4$-Alkyl oder Phenyl, oder 1-Naphthol, welches substituiert ist durch eine Gruppe der Formel (6), worin $R_8$ $C_1$-$C_2$-Alkyl und $R_9$ Hydroxy-$C_1$-$C_4$-alkyl oder $C_1$-$C_2$-Alkylcarbonyloxy-$C_1$-$C_4$-alkyl bedeuten;
5a. Pyrimidinderivate der Formel (7), worin $R_{10}$ und $R_{12}$ je Wasserstoff, $R_{11}$ und $R_{13}$ unabhängig voneinander je $C_1$-$C_4$-Alkyl oder Hydroxy-$C_1$-$C_4$-alkyl und $R_{14}$ Phenyl bedeuten;
6a. Cyanaminopyridine der Formel (8), worin $R_{15}$ Amino oder $C_1$-$C_2$-Alkyl, $R_{16}$ Amino oder -NH-$C_1$-$C_2$-Hydroxyalkyl, $R_{17}$ Wasserstoff und $R_{18}$ $C_1$-$C_8$-Alkyl, welches gegebenenfalls durch $C_1$-$C_8$-Alkoxy, Phenoxy oder Phenoxy-$C_1$-$C_4$-alkoxy substituiert ist.

7. Verfahren gemäss Ansprüchen 4 und 6, worin D eine Diazokomponente aus der folgenden Gruppe bedeutet;
   1b. Anilin, substituiert durch Acetylamino, $C_3$-$C_8$-Alkoxycarbonyl, Phenylsulfonyloxy oder Phenylazo;
   2b. Nitroanilin, welches noch mindestens einmal substituiert ist durch Chlor, Brom, Cyan oder Nitro;
   3b. 2-Amino-6-nitrobenzthiazol, 2-Aminobenzthiazol, welches zweimal durch Chlor substituiert ist, oder 3-Amino-5-nitrobenzisothiazol, und K eine Kupplungskomponente aus der folgenden Gruppe ist:
      1a. Pyridinderivate der Formel (2), worin B verzweigtes $C_1$-$C_{12}$-Alkyl oder $C_1$-$C_4$-Alkoxy-$C_2$-$C_4$-alkyl bedeutet;
      2a. Anilinderivate der Formel (3), worin $R_1$ und $R_2$ unabhängig voneinander je $C_1$-$C_4$-Alkyl bedeuten, welches gegebenenfalls substituiert ist durch Hydroxy, Cyan, $C_1$-$C_4$-Alkylcarbonyloxy, Phenylcarbonyloxy, Phenyl, Phenoxy-$C_1$-$C_4$-alkoxy oder $C_1$-$C_4$-Alkoxycarbonyl, $R_3$ Wasserstoff, Chlor, Methyl oder Methoxy und $R_4$ Wasserstoff oder Methoxy bedeuten.

8. Verfahren nach einem der Ansprüche 1 bis 7, dadurch gekennzeichnet, dass man einen Farbstoff einsetzt, der frei von Zusätzen, insbesondere frei von Stellmitteln und Dispergiermitteln, ist.

9. Verfahren nach einem der Ansprüche 1 bis 8, dadurch gekennzeichnet, dass man bei Temperaturen zwischen etwa 90 °C und etwa 200 °C, vorzugsweise zwischen etwa 100 °C und etwa 150 °C, färbt.

10. Verfahren nach einem der Ansprüche 1 bis 9, dadurch gekennzeichnet, dass man bei eimem Druck zwischen etwa 73 bar und etwa 400 bar, vorzugsweise zwischen etwa 150 bar und etwa 250 bar, färbt.

11. Verfahren nach einem der Ansprüche 1 bis 10, dadurch gekennzeichnet, dass man das Substrat in einem Flottenverhältnis zwischen etwa 1:2 bis etwa 1:100, vorzugsweise zwischen etwa 1:5 und etwa 1:75, färbt.

12. Verfahren nach einem der Ansprüche 1 bis 11, dadurch gekennzeichnet, dass man nach der Färbung das verwendete überkritische $CO_2$ reinigt und erneut zum Färben verwendet.

13. Verfahren nach Anspruch 12, dadurch gekennzeichnet, dass man das überkritische $CO_2$ mittels eines Filters reinigt.

14. Verfahren nach Anspruch 12 oder 13, dadurch gekennzeichnet, dass man das überkritische $CO_2$ durch eine Temperatur- und/oder Druckerniedrigung und/oder Volumenvergrösserung reinigt.

15. Anwendung des Verfahrens gemäss einem der Ansprüche 1 bis 14 zum Färben von Textilmaterial aus Polyester.

## Claims

1. A process for dyeing hydrophobic textile material with disperse dyes, which comprises treating said textile material in supercritical carbon dioxide with an azo dye of formula

   D - N = N - K (1)

   in which
   D is the radical of an aromatic diazo component and
   K is the radical of a coupling component.

2. A process according to claim 1, which comprises the use of an azo dye of formula (1), in which D is a diazo component selected from the group consisting of:
   1. aniline substituted by chlorine, cyano, $C_1$-$C_4$alkyl, $C_1$-$C_4$alkylcarbonylamino, $C_1$-$C_4$alkylphenylcarbonyl, $C_1$-$C_{12}$alkoxycarbonyl, phenylcarbonyl, phenylcarbonylamino, phenylsulfonyloxy, phenylazo or tetrahydrofurylmethoxycarbonyl,
   2. nitroaniline, unsubstituted or substituted by chlorine, bromine, nitro, cyano, $C_1$-$C_4$alkyl, $C_1$-$C_4$alkoxy, $C_1$-$C_4$alkoxycarbonyl, $C_1$-$C_4$alkylsulfonyl or phenylcarbonyl,
   3. 2-aminobenzothiazole or 3-aminobenzisothiazole, each unsubstituted or substituted by chlorine, bromine or nitro,

4. 5-amino-1,2,4-thiadiazole or 5-amino-1,3,4-thiadiazole, each unsubstituted or substituted by $C_1$-$C_4$alkylthio or $C_1$-$C_4$alkoxycarbonyl-$C_1$-$C_4$alkylthio,
5. 2-aminothiophene, unsubstituted or substituted by nitro, cyano, $C_1$-$C_4$alkylcarbonyl, $C_1$-$C_4$alkoxycarbonyl or phenylazo,
6. 2-amino-1,3-thiazole, unsubstituted or substituted by nitro,
7. 4-aminophthalimide, unsubstituted or substituted at the imide nitrogen by $C_1$-$C_4$alkyl and/or substituted in the phenyl ring by CN,
8. 2-aminoimidazole, unsubstituted or substituted by cyano or cyano-$C_1$-$C_4$alkyl,
9. 1-amino-4-phenylazonaphthalene.

**3.** A process according to claim 2, in which D is a diazo component selected from the group consisting of
1a. aniline substituted by $C_1$-$C_4$alkylcarbonylamino; $C_1$-$C_4$alkylphenylcarbonyl, $C_1$-$C_{12}$alkoxycarbonyl, phenylcarbonylamino, phenylsulfonyloxy, phenylazo or chloro,
2a. nitroaniline, unsubstituted or substituted by chlorine, bromine, cyano, nitro or $C_1$-$C_4$alkoxy,
3a. 2-aminobenzothiazole or 3-aminobenzisothiazole, each substituted by chlorine, bromine, or nitro,
4a. 5-amino-1,2,4-thiadiazole which is substituted by $C_1$-$C_4$alkoxycarbonyl-$C_2$-$C_4$alkylthio,
5a. nitro- or cyano-substituted 2-aminothiophene which is additionally substituted by at least one member selected from the group consisting of nitro, $C_1$-$C_4$alkylcarbonyl, $C_1$-$C_4$alkoxycarbonyl and phenylazo,
6a. 2-amino-5-nitro-1,3-thiazole,
7a. N-$C_1$-$C_4$alkyl-4-amino-5-cyanophthalimide,
8a. 1-cyanomethyl-2-amino-4,5-dicyanimidazole.

**4.** A process according to claim 3, in which D is a diazo component selected from the group consisting of:
1b. aniline which is substituted by acetylamino, $C_3$-$C_8$alkoxycarbonyl, phenylsulfonyloxy, phenylazo or chlorine
2b. nitroaniline which is additionally substituted by at least one member selected from the group consisting of chlorine, bromine, cyano and nitro,
3b. 2-amino-6-nitrobenzothiazole or 2-aminobenzothiazole, each substituted by two chlorine atoms, or 3-amino-5-nitrobenzisothiazole,
4b. 5-amino-3-$C_1$-$C_2$alkoxycarbonyl-$C_2$-$C_4$alkylthio-1,2,4-thiadiazole,
5b. 2-amino-3-nitro-5-$C_1$-$C_4$alkylcarbonylthiophene,
6b. 2-amino-5-nitro-1,3-thiazole,
7b. N-$C_1$-$C_2$alkyl-4-amino-5-cyanophthalimide.

**5.** A process according to any one of claims 1 to 4, which comprises the use of an azo dye of formula (1), in which K is a coupling component selected from the group consisting of:
1. pyridine derivatives of formula

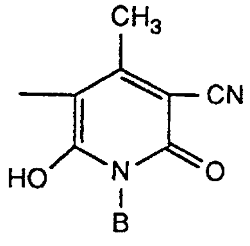

(2)

in
which B is $C_1$-$C_{16}$alkyl, unsubstituted or substituted by phenyl, phenoxy, hydroxyl or $C_1$-$C_4$alkoxy,

2. aniline derivatives of formula

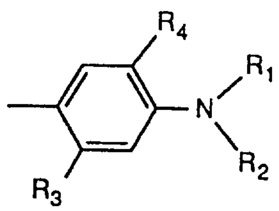

(3)

in which
$R_1$ and $R_2$ are each independently of the other hydrogen or $C_1$-$C_6$alkyl which is unsubstituted or substituted by cyano, hydroxyl, $C_1$-$C_4$alkylcarbonyloxy, phenylcarbonyloxy, cyano-$C_1$-$C_4$alkoxy, phenyl, phenoxy-$C_1$-$C_4$alkoxy, succinimido or $C_1$-$C_4$alkoxycarbonyl,
or in which $R_1$ and $R_2$, together with the linking nitrogen atom, form a 5-or 6-membered ring,
$R_3$ is hydrogen, chlorine, $C_1$-$C_4$alkyl, $C_1$-$C_4$alkoxy, $C_1$-$C_4$alkylcarbonylamino, $C_1$-$C_4$alkylsulfonylamino, phenylcarbonylamino or cyano-$C_1$-$C_4$alkylcarbonylamino, and
$R_4$ is hydrogen, chlorine, bromine, $C_1$-$C_4$alkyl or $C_1$-$C_4$alkoxy;
3. pyrazole derivatives of formula

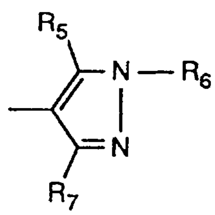

(4)

in which
$R_5$ is hydroxyl or imino,
$R_6$ is phenyl or a group of formula

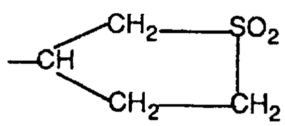

(5)

and
$R_7$ is $C_1$-$C_4$alkyl or $C_1$-$C_4$alkoxycarbonyl;
4. phenol or 1-naphthol, each unsubstituted or substituted by $C_1$-$C_4$alkyl or a group of formula

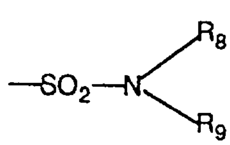

(6)

in which $R_8$ is $C_1$-$C_4$alkyl and $R_9$ is hydroxy-$C_1$-$C_4$alkyl or $C_1$-$C_4$alkylcarbonyloxy-$C_1$-$C_4$alkyl; or phenol which is substituted by phenyl;

5. pyrimidine derivatives of formula

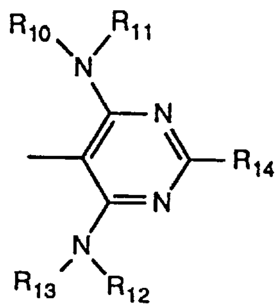

(7)

in which $R_{10}$, $R_{11}$, $R_{12}$ and $R_{13}$ are each independently of one another hydrogen, $C_1$-$C_4$alkyl, hydroxy-$C_1$-$C_4$alkyl, cyano-$C_1$-$C_4$alkyl or $C_1$-$C_4$alkoxy-$C_1$-$C_4$alkyl, and
$R_{14}$ is unsubstituted or substituted phenyl or naphthyl;
6. cyanoaminopyridines of formula

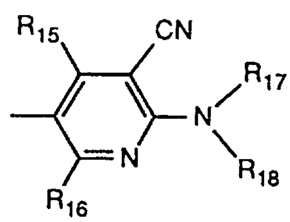

(8)

in which
$R_{15}$ is amino or $C_1$-$C_4$alkyl,
$R_{16}$ is amino, NH-$C_1$-$C_4$alkyl or -NH-$C_1$-$C_4$hydroxyalkyl, and
$R_{17}$ and $R_{18}$ are each independently of the other hydrogen or $C_1$-$C_8$alkyl which is unsubstituted or substituted by hydroxyl, cyano, chlorine, bromine, $C_1$-$C_8$alkoxy, phenoxy, phenyl or phenoxy-$C_1$-$C_4$alkoxy.

**6.** A process according to claim 5, in which K is a coupling component selected from the group consisting of:
1a. Pyridine derivatives of formula (2), in which B is branched $C_1$-$C_{12}$alkyl or $C_1$-$C_4$alkoxy-$C_2$-$C_4$alkyl;
2a. aniline derivatives of formula (3), in which $R_1$ and $R_2$ are each independently of the other $C_1$-$C_4$alkyl which is unsubstituted or substituted by hydroxyl, cyano, $C_1$-$C_4$alkylcarbonyloxy, phenylcarbonyloxy, phenyl, phenoxy-$C_1$-$C_4$alkoxy or $C_1$-$C_4$alkoxycarbonyl, $R_3$ is hydrogen, chlorine, methyl or methoxy and $R_4$ is hydrogen or methoxy;
3a. pyrazole derivatives of formula (4), in which $R_5$ is hydroxyl, $R_6$ is phenyl and $R_7$ is $C_1$-$C_4$alkyl or $C_1$-$C_4$alkoxycarbonyl;
4a. phenol which is substituted by $C_1$-$C_4$alkyl or phenyl, or 1-naphthol which is substituted by a group of formula (6) , in which $R_8$ is $C_1$-$C_2$alkyl and $R_9$ is hydroxy-$C_1$-$C_4$alkyl or $C_1$-$C_2$alkylcarbonyloxy-$C_1$-$C_4$alkyl;
5a. pyrimidine derivatives of formula (7), in which $R_{10}$ and $R_{12}$ are each hydrogen, $R_{11}$ and $R_{13}$ are each independently of the other $C_1$-$C_4$alkyl or hydroxy-$C_1$-$C_4$alkyl and $R_{14}$ is phenyl;
6a. cyanoamino pyridines of formula (8), in which $R_{15}$ is amino or $C_1$-$C_2$alkyl, $R_{16}$ is amino or -NH-$C_1$-$C_2$hydroxyalkyl, $R_{17}$ is hydrogen and $R_{18}$ is $C_1$-$C_8$alkyl which is unsubstituted or substituted by $C_1$-$C_8$alkoxy, phenoxy or phenoxy-$C_1$-$C_4$alkoxy.

**7.** A process according to either claim 4 or claim 6, in which D is a diazo component selected from the group consisting of:

1b. aniline which is substituted by acetylamino, $C_3$-$C_8$alkoxycarbonyl, phenylsulfonyloxy or phenylazo;
2b. nitroaniline which is additionally substituted by at least one member selected from the group consisting of chlorine, bromine, cyano and nitro;
3b. 2-amino-6-nitrobenzothiazole or 2-aminobenzothiazole, which is substituted by two chlorine atoms, or 3-amino-5-nitrobenzisothiazole, and K is a coupling component selected from the group consisting of:
1a. pyridine derivatives of formula (2), in which B is branched $C_1$-$C_{12}$alkyl or $C_1$-$C_4$alkoxy-$C_2$-$C_4$alkyl;
2a. aniline derivatives of formula (3), in which $R_1$ and $R_2$ are each independently of the other $C_1$-$C_4$alkyl which is unsubstituted or substituted by hydroxyl, cyano, $C_1$-$C_4$alkylcarbonyloxy, phenylcarbonyloxy, phenyl, phenoxy-$C_1$-$C_4$alkoxy or $C_1$-$C_4$alkoxycarbonyl, $R_3$ is hydrogen, chlorine, methyl or methoxy, and $R_4$ is hydrogen or methoxy.

**8.** A process according to any one of claims 1 to 7, which comprises the use of a dye which contains no auxiliaries, preferably no diluents and dispersants.

**9.** A process according to any one of claims 1 to 8, wherein dyeing is carried out in the temperature range from about 90 to about 200 °C, preferably from about 100 to about 150 °C.

**10.** A process according to any one of claims 1 to 9, wherein dyeing is carried out at a pressure from about 73 to about 400 bar, preferably from about 150 to about 250 bar.

**11.** A process according to any one of claims 1 to 10, wherein the substrate is dyed at a liquor ratio of about 1:2 to about 1:100, preferably about 1:5 to about 1:75.

**12.** A process according to any one of claims 1 to 11, wherein the supercritical $CO_2$ used is purified after dyeing and reused for further dyeing.

**13.** A process according to claim 12, wherein the supercritical $CO_2$ is purified with a filter.

**14.** A process according to either claim 12 or claim 13, wherein the supercritical $CO_2$ is purified by a temperature and/or pressure reduction and/or by an increase in volume.

**15.** Use of a process according to any one of claims 1 to 14, for dyeing polyester textile material.

**Revendications**

**1.** Procédé de teinture de matériaux textiles hydrophobes par des colorants de dispersion, caractérisé en ce que l'on traite le matériau textile dans du $CO_2$ supercritique, avec un colorant de formule

(1) D - N = N - K

dans laquelle D représente le résidu d'un composant diazo aromatique et K le résidu d'un copulant.

**2.** Procédé conforme à la revendication 1, caractérisé en ce que l'on utilise un colorant azoïque de formule (1) dans laquelle D représente un composant diazo choisi dans le groupe suivant :
1. aniline substituée par un atome de chlore, un groupe cyano, alkyle en $C_1$-$C_4$, (alkyle en $C_1$-$C_4$)-carbonylamino, (alkyle en $C_1$-$C_4$)-phénylcarbonyle, (alcoxy en $C_1$-$C_{12}$)-carbonyle, phénylcarbonyle, phénylcarbonylamino, phénylsulfonyloxy, phénylazo ou tétrahydrofurylméthoxycarbonyle;
2. nitroaniline éventuellement substituée par un atome de chlore ou de brome ou par un groupe nitro, cyano, alkyle en $C_1$-$C_4$, alcoxy en $C_1$-$C_4$, (alcoxy en $C_1$-$C_4$)-carbonyle, (alkyle en $C_1$-$C_4$)-sulfonyle ou phénylcarbonyle;
3. 2-aminobenzothiazole ou 3-aminobenzo-isothiazole, éventuellement substitués par un atome de chlore ou de brome ou par un groupe nitro;
4. 5-amino-1,2,4-thiadiazole ou 5-amino-1,3,4-thiadiazole, éventuellement substitués par un groupe (alkyle en $C_1$-$C_4$)-thio ou (alcoxy en $C_1$-$C_4$)-carbonyl-(alkyle en $C_1$-$C_4$)-thio;

5. 2-aminothiophène, éventuellement substitué par un groupe nitro, cyano, (alkyle en $C_1$-$C_4$ )-carbonyle, (alcoxy en $C_1$-$C_4$ )-carbonyle ou phénylazo;
6. 2-aminothiazole-1,3 éventuellement substitué par un groupe nitro,
7. 4-aminophtalimide, éventuellement substitué, sur l'azote du groupe imide, par un groupe alkyle en $C_1$-$C_4$ et/ou, sur le noyau phényle, par un groupe CN;
8. 2-aminoimidazole, éventuellement substitué par un groupe cyano ou cyano-(alkyle en $C_1$-$C_4$);
9. 1-amino-4-phénylazonaphtalène.

**3.** Procédé conforme à la revendication 2 dans lequel D est un composant diazo choisi dans le groupe suivant :

1a. aniline substituée par un groupe (alkyle en $C_1$-$C_4$ )-carbonylamino, (alkyle en $C_1$-$C_4$ )-phénylcarbonyle, (alcoxy en $C_1$-$C_{12}$ )-carbonyle, phénylcarbonylamino, phénylsulfonyloxy, phénylazo ou un atome de chlore;
2a. nitroaniline éventuellement substituée par un atome de chlore ou de brome ou par un groupe cyano, nitro ou alcoxy en $C_1$-$C_4$;
3a. 2-aminobenzothiazol ou 3-aminobenzo-isothiazol, éventuellement substitués par un atome de chlore ou de brome ou par un groupe nitro;
4a. 5-amino- 1,2,4-thiadiazole substitué par un groupe (alcoxy en $C_1$-$C_4$ )-carbonyl-(alkyle en $C_2$-$C_4$ )-thio;
5a. 2-aminothiophène substitué par un groupe nitro ou cyano, et substitué en plus au moins par un groupe nitro, (alkyle en $C_1$-$C_4$ )-carbonyle, (alcoxy en $C_1$-$C_4$ )-carbonyle ou phénylazo;
6a. 2-amino-5-nitro-thiazole-1,3,
7a. N-(alkyle en $C_1$-$C_4$)-4-amino-5-cyanophtalimide;
8a. 1-cyanométhyl-2-amino-4,5-dicyanoimidazole.

**4.** Procédé conforme à la revendication 3 dans lequel D est un composant diazo choisi dans le groupe suivant :

1b. aniline substituée par un groupe acétylamino, (alcoxy en $C_3$-$C_8$ )-carbonyle, phénylsulfonyloxy, phénylazo ou un atome de chlore;
2b. nitroaniline, substituée au moins une deuxième fois par un atome de chlore ou de brome ou par un groupe cyano ou nitro;
3b. 2-amino-6-nitrobenzothiazoel, 2-aminobenzothiazole substitué par deux atomes de chlore ou 3-amino-5-nitro-benzoisothiazole;
4b. 5-amino-3-(alcoxy en $C_1$-$C_2$)-carbonyl-(alkyle en $C_2$-$C_4$ )-thio-1,2,4-thiadiazole;
5b. 2-amino-3-nitro-5-alkyle en $C_1$-$C_4$ )-carbonylthiophène;
6b. 2-amino-5-nitro-thiazol-1,3,
7b. N-(alkyle en $C_1$-$C_2$)-4-amino-5-cyanophtalimide;

**5.** Procédé conforme à une des revendications 1 à 4, caractérisé en ce que l'on utilise un colorant azoïque de formule (1) dans laquelle K représente un copulant choisi dans le groupe suivant :

1. dérivés de la pyridine de formule

(2)

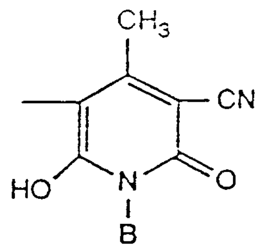

dans laquelle B représente un groupe alkyle $C_1$-$C_{16}$, éventuellement substitué par un groupe phényle, phénoxy, hydroxy ou alcoxy en $C_1$-$C_4$;

2. dérivés de l'aniline de formule

(3) 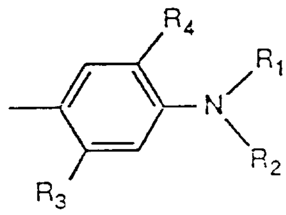

dans laquelle $R_1$ et $R_2$ représentent indépendamment un atome d'hydrogène ou un radical alkyle en $C_1$-$C_6$, qui peut être substitué par un groupe cyano, hydroxy, (alkyle en $C_1$-$C_4$ )-carbonyloxy, phénylcarbonyloxy, cyano-(alcoxy en $C_1$-$C_4$ ), phényle, phénoxy-(alcoxy en $C_1$-$C_4$ ), succinimido ou (alcoxy en $C_1$-$C_4$)-carbonyle,

ou dans laquelle $R_1$ et $R_2$ forment avec l'atome d'azote qui les relie un cycle à 5 ou 6 chaînons,

$R_3$ représente un atome d'hydrogène ou de chlore, un groupe alkyle en $C_1$-$C_4$, alcoxy en $C_1$-$C_4$, (alkyle en $C_1$-$C_4$)-carbonylamino, (alkyle en $C_1$-$C_4$)-sulfonylamino, phénylcarbonylamino ou cyano-(alkyle en $C_1$-$C_4$ )-carbonylamino et

$R_4$ représente un atome d'hydrogène un atome de chlore, un atome de brome, un groupe alkyle en $C_1$-$C_4$ ou alcoxy en $C_1$-$C_4$.

3. dérivés du pyrazole de formule

(4) 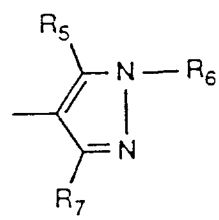

dans laquelle $R_5$ représente un groupe hydroxy ou imino,

$R_6$ représente un groupe phényle ou un groupe de formule

(5) 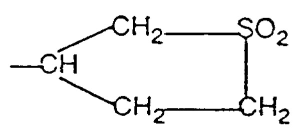

et $R_7$ représente un groupe alkyle en $C_1$-$C_4$ ou (alcoxy en $C_1$-$C_4$ )-carbonyle.

4. phénol ou 1-naphtol, pouvant être substitués par un groupe alkyle en $C_1$-$C_4$ ou un groupe de formule

(6) 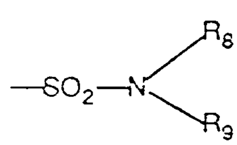

dans laquelle $R_8$ représente un groupe alkyle en $C_1$-$C_4$ et $R_9$ un groupe hydroxy-(alkyle en $C_1$-$C_4$ ) ou (alkyle en $C_1$-$C_4$)-carbonyloxy-(alkyle en $C_1$-$C_4$),

ou phénol substitué par un groupe phényle.

5. dérivés de la pyrimidine de formule

(7)

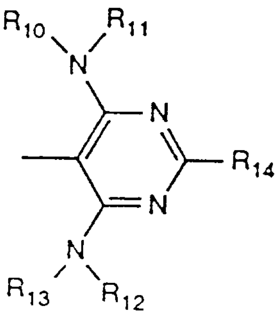

dans laquelle $R_{10}$, $R_{11}$, $R_{12}$ et $R_{13}$ représentent indépendamment un atome d'hydrogène, un groupe alkyle en $C_1$-$C_4$, hydroxy-(alkyle en $C_1$-$C_4$), cyano-(alkyle en $C_1$-$C_4$) ou (alcoxy en $C_1$-$C_4$)-(alkyle en $C_1$-$C_4$) et $R_{14}$ représente un groupe phényle ou naphtyle éventuellement substitués;

6. des cyano-amino-pyridines de formule

(8)

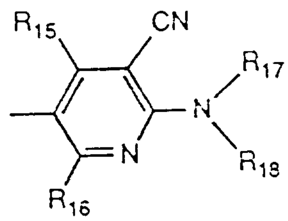

dans laquelle $R_{15}$ représente un groupe amino ou (alkyle en $C_1$-$C_4$), $R_{16}$ représente un groupe amino, NH-alkyle en $C_1$-$C_4$ ou NH-hydroxyalkyle en $C_1$-$C_4$ et $R_{17}$ et $R_{18}$ représentent indépendamment un atome d'hydrogène ou un groupe alkyle en $C_1$-$C_8$, pouvant être substitué par un groupe hyroxy, cyano, chloro, bromo, alcoxy en $C_1$-$C_8$, phénoxy, phényle ou phénoxy-(alcoxy en $C_1$-$C_4$).

**6.** Procédé conforme à la revendication 5 dans lequel K représente un copulant choisi dans le groupe suivant :

1a. dérivés de pyridine de formule (2) dans laquelle B représente un groupe alkyle $C_1$-$C_{12}$ ramifié ou un groupe (alcoxy en $C_1$-$C_4$)-(alkyle en $C_2$-$C_4$);

2a. dérivés de l'aniline de formule (3) dans laquelle $R_1$ et $R_2$ représentent indépendamment un radical alkyle en $C_1$-$C_4$ qui peut être substitué par un groupe cyano, hydroxy, (alkyle en $C_1$-$C_4$ )-carbenyloxy, phénylcarbonyloxy, phényle, phénoxy-(alcoxy en $C_1$-$C_4$ ) ou (alcoxy en $C_1$-$C_4$)-carbonyle, $R_3$ représente un atome d'hydrogène ou de chlor, un groupe méthyle ou méthoxy et $R_4$ un atome d'hydrogène ou un groupe méthoxy;

3a. dérivés du pyrazole de formule (4) dans laquelle $R_5$ représente un groupe hydroxy, $R_6$ représente un groupe phényle et $R_7$ un groupe alkyle en $C_1$-$C_4$ ou un groupe (alcoxy en $C_1$-$C_4$ )-carbonyle.

4a. phénol substitué par un groupe alkyle en $C_1$-$C_4$ ou un groupe phényle, ou 1-naphtol substitué par un groupe de formule (6) dans laquelle $R_8$ représente un groupe alkyle en $C_1$-$C_2$ et $R_9$ un groupe hydroxy-(alkyle en $C_1$-$C_4$ ) ou (alkyle en $C_1$-$C_2$)-carbonyloxy-(alkyle en $C_1$-$C_4$ );

5a. dérivés de la pyrimidine de formule (7) dans laquelle $R_{10}$ et $R_{12}$ représentent un atome d'hydrogène, $R_{11}$ et $R_{13}$ représentent indépendamment un groupe alkyle en $C_1$-$C_4$, hydroxy-(alkyle en $C_1$-$C_4$), et $R_{14}$ représente un groupe phényle;

6a. des cyano-amino-pyridines de formule (8) dans laquelle $R_{15}$ représente un groupe amino ou (alkyle en $C_1$-$C_2$), $R_{16}$ représente un groupe amino ou NH-hydroxyalkyle en $C_1$-$C_2$ et $R_{17}$ représente un atome d'hydrogène et $R_{18}$ un groupe alkyle en $C_1$-$C_8$, pouvant être substitué par un groupe alcoxy en $C_1$-$C_8$, phénoxy, phényle ou phénoxy-(alcoxy en $C_1$-$C_4$).

**7.** Procédé conforme aux revendications 4 et 6 dans lequel D représente un composant diazo choisi dans le groupe suivant :

1b. aniline substituée par un groupe acétylamino, (alcoxy en $C_3$-$C_8$ )-carbonyle, phénylsulfonyloxy ou phénylazo;
2b. nitroaniline substituée au moins une deuxième fois par un atome de chlore ou de brome ou par un groupe cyano ou nitro;
3b. 2-amino-6-nitrobenzothiazol, 2-aminobenzothiazol substitué par deux atomes de chlore ou 3-amino-5-nitro-benzoisothiazol; et K représente un copulant choisi dans le groupe suivant :
  1a. dérivés de la pyridine de formule (2) dans laquelle B représente un groupe alkyle $C_1$-$C_{12}$ ramifié ou un groupe (alcoxy en $C_1$-$C_4$)-(alkyle en $C_2$-$C_4$);
  2a. dérivés de l'aniline de formule (3) dans laquelle $R_1$ et $R_2$ représentent indépendamment un radical alkyle en $C_1$-$C_4$ qui peut être substitué par un groupe cyano, hydroxy, (alkyle en $C_1$-$C_4$ )-carbonyloxy, phénylcarbonyloxy, phényle, phénoxy-(alcoxy en $C_1$-$C_4$), ou (alcoxy en $C_1$-$C_4$)-carbonyle, $R_3$ représente un atome d'hydrogène ou de chlor, un groupe méthyle ou méthoxy et $R_4$ un atome d'hydrogène ou un groupe méthoxy;

**8.** Procédé conforme à une des revendications 1 à 7, caractérisé en ce que l'on utilise un colorant exempt d'adjuvants, en particulier exempt d'agents d'ajustement et d'agents de dispersion.

**9.** Procédé conforme à une des revendication 1 à 8, caractérisé en ce que l'on teint à des températures comprises entre environ 90 °C et environ 200 °C, de préférence entre environ 100 °C et environ 150 °C.

**10.** Procédé conforme à une des revendications 1 à 9, caractérisé en ce que l'on teint à une pression comprise entre environ 73 bar et environ 400 bar, de préférence entre environ 150 bar et environ 250 bar.

**11.** Procédé conforme à une des revendications 1 à 10, caractérisé en ce que le substrat est teint avec un rapport de bain compris entre environ 1/2 et environ 1/100, de préférence entre environ 1/5 et environ 1/75.

**12.** Procédé conforme à une des revendications 1 à 11, caractérisé en ce que l'on épure le $CO_2$ supercritique utilisé après la teinture et que l'on l'utilise de nouveau pour une teinture ultérieure.

**13.** Procédé conforme à la revendication 12, caractérisé en ce que l'on épure le $CO_2$ supercritique à l'aide d'un filtre.

**14.** Procédé conforme à la revendication 12 ou 13, caractérisé en ce que l'on épure le $CO_2$ supercritique par abaissement de la température et/ou de la pression et/ou par augmentation du volume.

**15.** Utilisation du procédé conforme à une des revendications 1 à 14 pour la teinture de matériaux textiles en polyester.